# EUROPEAN PATENT SPECIFICATION

(11) **EP 3 930 424 B1**
(45) Date of publication and mention of the grant of the patent: **28.02.2024**
(21) Application number: 20182407.5
(22) Date of filing: 26.06.2020
(51) Int. Cl.: H05B 6/12

(54) **SUPPORT DEVICE FOR AN INDUCTION COIL**
HALTEVORRICHTUNG FÜR EINE INDUKTIONSSPULE
DISPOSITIF DE SUPPORT POUR UNE BOBINE D'INDUCTION

(43) Date of publication of application: 29.12.2021
(73) Proprietor: ELECTROLUX APPLIANCES AKTIEBOLAG, 105 45 Stockholm (SE)
(72) Inventor: MILANESI, Filippo, 47122 Forli (IT); NOSTRO, Massimo, 47122 Forli (IT); VIROLI, Alex, 47122 Forli (IT); ZANGOLI, Massimo, 47122 Forli (IT); URGESE, Emanuel, 47100 Forli (IT); MEI, Pasquale, 42123 Reggio Emilia (IT); CORSI, Giacomo, 47122 Forli (IT); MENGOZZI, Alan, 47122 Forli (IT)
(74) Representative: Electrolux Group Patents

(56) References cited:
- EP-A1- 2 876 975
- DE-A1-102007 018 783
- JP-A- S5 618 391
- JP-A- H10 302 953
- JP-A- 2005 005 273
- JP-A- 2005 302 406
- JP-A- 2010 010 038

## Description

The present invention relates to a support device for an induction coil of an induction heating appliance. Further, the present invention relates to an induction coil for an induction heating appliance. Moreover, the present invention relates to an induction heating appliance, in particular an induction cooking appliance, for example an induction cooking hob or an induction cooking oven.

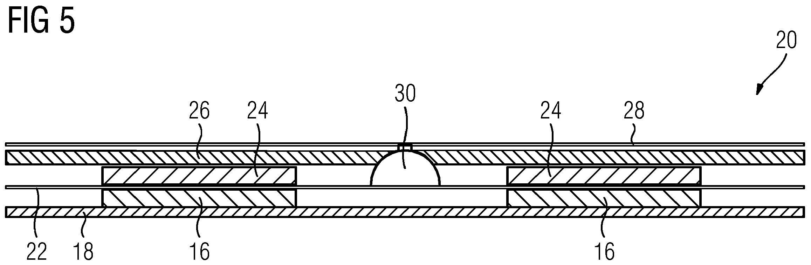

A conventional induction coil includes several components having specific functions. FIG 5 illustrates a schematic sectional side view of an induction coil 20 according to the prior art. The induction coil 20 comprises a metal base plate 18 and a ferrite layer or ferrite elements 16 arranged on said metal base plate 18. A winding support layer 22 is arranged on the ferrite elements 16 and supports a coil winding 24. A thermal insulating layer 26 is arranged above the coil winding 24. In turn, an electric insulating layer 28 is arranged above said thermal insulating layer 26. A temperature sensor 30 is arranged within a recess of the coil winding 24. The metal base plate 18 is provided for supporting the other components of the induction coil 20 on the one hand and acts as magnetic shield for the area beneath said metal base plate 18 on the other hand. For example, the metal base plate 18 is made of aluminium.

However, the coil winding 24 requires a relative high number of winding turns due to the presence of the metal base plate 18. Further, the interaction of the metal base plate 18 with the magnetic field reduces the energy efficiency of the induction coil 20.

JP S56-18391 A describes an induction heating cooking device comprising a non-magnetic and non-metallic pot holding plate, a spiral heating coil arranged at the lower part of the pot holding plate, a heating coil mounting substrate holding the heating coil and an inverter device for driving a high frequency current, wherein said heating coil mounting substrate is made of a low loss high permeability material buried in an insulating substrate.

JP 2005-302406 A describes an induction heating cooking appliance equipped with a fan apparatus which supplies cooling air to a downward direction of a heating coil which heats a cooking pot. The heating coil is made to contact a ferrite directly thermally, and is mounted on it. Through this ferrite, the heat of this heating coil is diffused.

It is an object of the present invention to provide a support device for an induction coil, which reduces the costs of materials and increases the energy efficiency of the induction coil.

The object is achieved by a first inventive version the support device for an induction coil according to claim 1. Further, the object is achieved by a second inventive version the support device for an induction coil according to claim 2.

According to the present invention a support device for an induction coil of an induction heating appliance is provided, wherein:
- the support device includes at least one coil base plate adapted for supporting the induction coil,
- the coil base plate is made of at least one electrically non-conductive material,
- the support device includes at least one electrically conductive and/or magnetic layer, and
- the electrically conductive and/or magnetic layer is applied on at least one large-area side of the coil base plate.

The core of the present invention is the electrically conductive and/or magnetic layer applied on the coil base plate made of electrically non-conductive material. The coil base plate provides mechanical support, while the electrically conductive and/or magnetic layer acts as electric and/or magnetic shield for the area on the opposite side of a winding of the induction coil. This concept allows a thin electrically conductive and/or magnetic layer and a reduced number of winding turns for a given coil inductivity value. Further, the support device of the present invention improves the energy efficiency of the induction coil, since the interaction between the thin electrically conductive layer and the magnetic field is reduced.

Further, the support device includes at least one ferrite element arranged - according to the first inventive version of the support device - on the electrically conductive and/or magnetic layer or - according to the second inventive version of the support device - directly on the coil base plate.

For example, the electrically conductive and/or magnetic layer is a metal layer attached on the coil base plate.

Preferably, the metal layer is made of non-magnetic material.

According to the first inventive version of the support device, the electrically conductive and/or magnetic layer is an electrically conductive and/or magnetic paint layer applied on the coil base plate.

For example, the electrically conductive paint layer is made of non-magnetic material. The non-magnetic material has lower losses than magnetic material, so that the energy efficiency is higher. The electrically conductive layer with non-magnetic properties shields the electric field. However, the electrically conductive layer with non-magnetic properties shields has no effect on the magnetic field.

Alternatively or additionally to the electrically conductive layer made of non-magnetic material, an electrically non-conductive layer made of magnetic material can be used to shield the magnetic field. The magnetic, but electrically non-conductive, material has lower losses than magnetic and electrically conductive material, so that the energy efficiency is higher. The magnetic, but electrically non-conductive, has no effect on the electric field.

Furthermore, the electrically conductive layer with non-magnetic properties may be evenly distributed on at least one large-area side of the coil base plate.

According to the second inventive version of the support device, the electrically conductive layer with non-magnetic properties is subdivided into separate parts. In a similar way, the magnetic layer with electrically non-conductive is subdivided into separate parts.

According to the second inventive version of the support device, the separate parts of the electrically conductive and/or magnetic layer and the ferrite elements are arranged side-by-side on the coil base plate.

For example, the electrically conductive and/or magnetic layer and/or the separate parts of the electrically conductive and/or magnetic layer are electrically floating. Thus, no electrical connections are required. This contributes to low complexity of the support device.

Alternatively, the electrically conductive and/or magnetic layer and/or the separate parts of the electrically conductive and/or magnetic layer may be connected to an electrical reference point. This in an improvement on EMC emissions.

The coil base plate is made of plastic, mica, fibre glass compound and/or composite epoxy material.

Further, the present invention relates to an induction coil for an induction heating appliance, in particular for an induction cooking appliance, preferably for an induction cooking hob or induction cooking oven, wherein the induction coil includes the support device mentioned above.

Moreover, the present invention relates to an induction heating appliance, in particular an induction cooking appliance, preferably an induction cooking hob or induction cooking oven, wherein the induction heating appliance comprises at least one support device and/or at least one induction coil described above.

Novel and inventive features of the present invention are set forth in the appended claims.

The present invention will be described in further detail with reference to the drawings, in which
- FIG 1: illustrates a schematic top view of a support device for an induction coil according to a first embodiment of the present invention,
- FIG 2: illustrates a schematic sectional side view of the support device for the induction coil according to the first embodiment of the present invention,
- FIG 3: illustrates a schematic top view of the support device for the induction coil according to a second embodiment of the present invention,
- FIG 4: illustrates a schematic sectional side view of the support device for the induction coil according to the second embodiment of the present invention, and
- FIG 5: illustrates a schematic sectional side view of an induction coil according to the prior art.

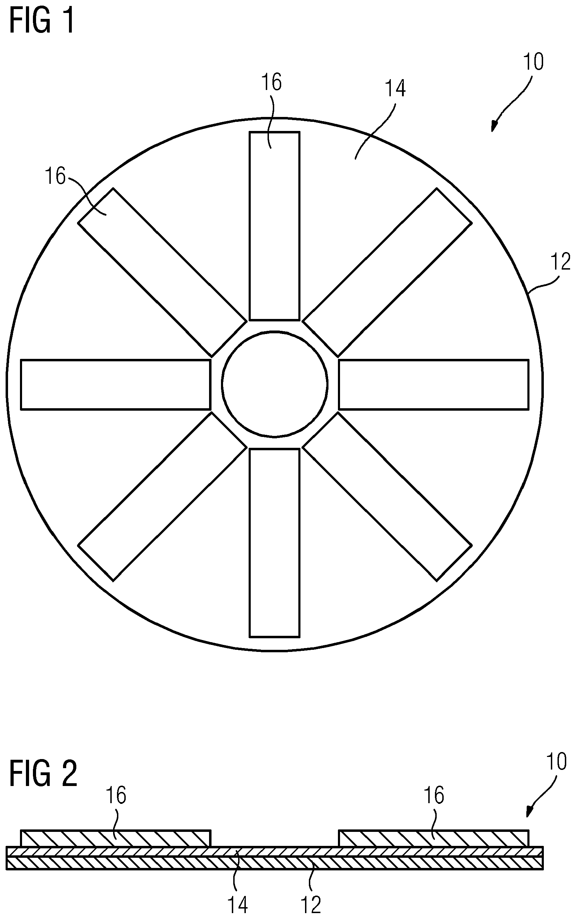

FIG 1 illustrates a schematic top view of a support device 10 for an induction coil according to a first embodiment of the present invention.

In general, the support device 10 for the induction coil is provided for an arbitrary induction heating appliance. In particular, the support device 10 for the induction coil is provided for an induction cooking appliance. For example, the support device 10 for the induction coil is provided for an induction cooking hob or an induction cooking oven.

The support device 10 includes a coil base plate 12 and an electrically conductive layer 14. The coil base plate 12 is coated by the electrically conductive layer 14. In this embodiment, the upper large-area side of the coil base plate 12 is coated by the electrically conductive layer 14. In this example, the coil base plate 12 is formed as a circular disk.

The coil base plate 12 is made of at least one electrically nonconducting material. For example, the coil base plate 12 is made of plastic, mica, fibre glass compound, composite epoxy material (CEM) and/or the like. The electrically conductive layer 14 may be a non-magnetic or magnetic layer. For example, the electrically conductive layer 14 is a thin metal layer or a conductive paint layer.

In particular, the support device 10 is provided for supporting winding of the induction coil. The coil base plate 12 provides mechanical support, while the electrically conductive layer 14 acts as magnetic shield for the area opposite side of a winding of the induction coil.

Further, the support device 10 includes ferrite elements 16. For example, the ferrite elements 16 are formed as rectangular sheet elements. In this embodiment, the ferrite elements 16 are arranged on the electrically conductive layer 14. In this example, eight elongated ferrite elements 16 extend in the radial direction.

FIG 2 illustrates a schematic sectional side view of the support device 10 for the induction coil according to the first embodiment of the present invention.

The support device 10 includes the coil base plate 12, the electrically conductive layer 14 and the ferrite elements 16. In this embodiment, the upper large-area side of the coil base plate 12 is coated by the electrically conductive layer 14 and the ferrite elements 16 are arranged on said electrically conductive layer 14.

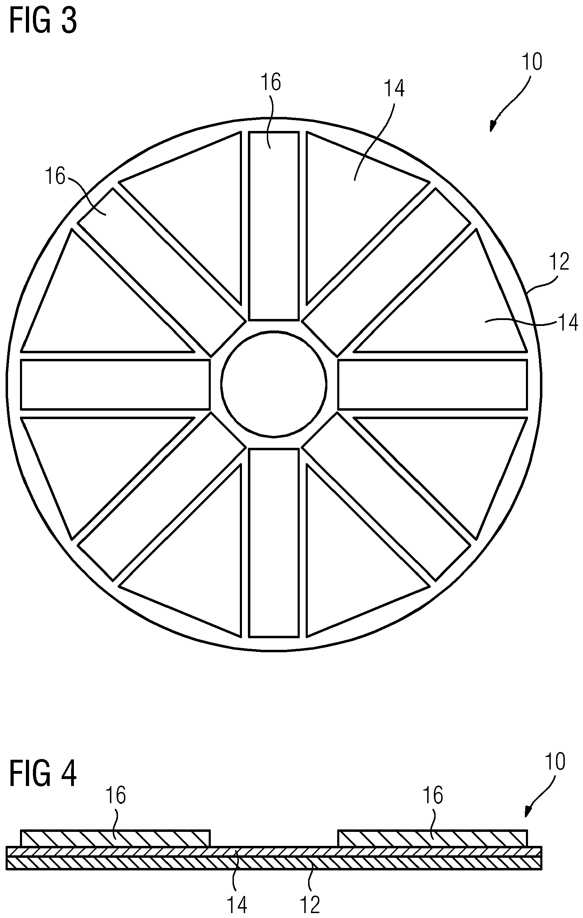

FIG 3 illustrates a schematic top view of the support device 10 for the induction coil according to a second embodiment of the present invention.

The support device 10 includes the coil base plate 12, the electrically conductive layer 14 and the ferrite elements 16. Also in this example, the coil base plate 12 is formed as circular disk. In this embodiment, the upper large-area side of the coil base plate 12 is partially coated by the electrically conductive layer 14, wherein said electrically conductive layer 14 is subdivided into separate triangular parts. The ferrite elements 16 are formed as elongated rectangular sheet elements, extend in the radial direction and are arranged directly on the coil base plate 12. The separate triangular parts of the electrically conductive layer 14 are arranged between two adjacent ferrite elements 16 in each case. In this example, the electrically conductive layer 14 includes eight separate triangular parts, while the support device 10 includes eight ferrite elements 16. Preferably, the ferrite elements 16 cover the majority of a coil winding 24, so that the magnetic field is efficiently shielded.

FIG 4 illustrates a schematic sectional side view of the support device 10 for the induction coil according to the second embodiment of the present invention.

The support device 10 includes the coil base plate 12, the electrically conductive layer 14 and the ferrite elements 16. In this embodiment, the upper large-area side of the coil base plate 12 is partially coated by the electrically conductive layer 14, while the ferrite elements 16 are directly arranged on said coil base plate 12. In other words, the electrically conductive layer 14 and the ferrite elements 16 are arranged side-by-side on the coil base plate 12.

In the embodiments mentioned above, the upper large-area side of the coil base plate 12 is completely or partially, respectively, coated by the electrically conductive layer 14. Alternatively or additionally, the lower large-area side of the coil base plate 12 may be coated by the electrically conductive layer 14.

For example, the electrically conductive layer 14 is a non-magnetic thin metal layer. Further, the electrically conductive layer 14 may be a magnetic or non-magnetic conductive paint layer.

Moreover, the electrically conductive layer 14 may be electrically either floating or connected to an electrical reference point.

Additionally, the coil base plate 12 may includes cut-outs, recesses and/or slots for fixing a coil support or a coil winding.

FIG 5 illustrates a schematic sectional side view of an induction coil 20 according to the prior art. The induction coil 20 comprises a metal base plate 18 and a ferrite layer or the ferrite elements 16 arranged on said metal base plate 18. A winding support layer 22 is arranged on the ferrite elements 16 and supports a coil winding 24. A thermal insulating layer 26 is arranged above the coil winding 24. In turn, an electric insulating layer 28 is arranged above said thermal insulating layer 26. A temperature sensor 30 is arranged within a recess of the coil winding 24. The metal base plate 18 is provided for supporting the other components of the induction coil 20 on the one hand and acts as magnetic shield for the area beneath said metal base plate 18 on the other hand. For example, the metal base plate 18 is made of aluminium.

Due to the presence of the metal base plate 18, the coil winding 24 requires a lot of winding turns. Further, the interaction of the metal base plate 18 with the magnetic field reduces the energy efficiency of the induction coil 20.

In contrast, the support device 10 according to the present invention with the thin electrically conductive layer 14 allows a decreased number of winding turns for a given coil inductivity value. Further, the support device 10 of the present invention improves the energy efficiency of the induction coil, since the interaction between the thin electrically conductive layer 14 and the magnetic field is reduced. Moreover, the thickness of the induction coil is reduced, since the absence of the metal base plate 18 does not require any insulating elements for supporting said metal base plate 18.

Although illustrative embodiments of the present invention have been described herein with reference to the accompanying drawings, it is to be understood that the present invention is not limited to those precise embodiment, and that various other changes and modifications may be affected therein by one skilled in the art without departing from the scope of the invention. All such changes and modifications are intended to be included within the scope of the invention as defined by the appended claims.

### List of reference numerals

- 10: support device
- 12: coil base plate
- 14: electrically conductive layer
- 16: ferrite element
- 18: metal base plate
- 20: induction coil
- 22: coil support layer
- 24: coil winding
- 26: thermal insulating layer
- 28: electric insulating layer
- 30: temperature sensor

## Claims

1. A support device (10) for an induction coil of an induction heating appliance, wherein:
- the support device (10) includes at least one coil base plate (12) adapted for supporting the induction coil,
- the coil base plate (12) is made of at least one electrically non-conductive material,
- the support device (10) includes at least one electrically conductive and/or magnetic layer (14), and
- the electrically conductive and/or magnetic layer (14) is applied on at least one large-area side of the coil base plate (12),
- the support device (10) includes at least one ferrite element (16) arranged on the electrically conductive and or magnetic layer (14),
**characterised in that**
the electrically conductive and/or magnetic layer (14) is an electrically conductive and/or magnetic paint layer applied on the coil base plate (12).

2. A support device (10) for an induction coil of an induction heating appliance, wherein:
- the support device (10) includes at least one coil base plate (12) adapted for supporting the induction coil,
- the coil base plate (12) is made of at least one electrically non-conductive material,
- the support device (10) includes at least one electrically conductive and/or magnetic layer (14), and
- the electrically conductive and/or magnetic layer (14) is applied on at least one large-area side of the coil base plate (12),
**characterised in that**
the support device (10) includes at least one ferrite element (16) arranged directly on the coil base plate (12), and the electrically conductive and/or magnetic layer (14) is subdivided into separate parts, wherein the separate parts of the electrically conductive and/or magnetic layer (14) and the ferrite elements are arranged side-by-side on the coil base plate (12).

3. The support device according to claim 2,
**characterised in that**
the electrically conductive and/or magnetic layer (14) is a metal layer attached on the coil base plate (12).

4. The support device according to claim 3,
**characterised in that**
the metal layer (14) is made of non-magnetic or magnetic material.

5. The support device according to claim 2,
**characterised in that**
the electrically conductive and/or magnetic layer (14) is an electrically conductive and/or magnetic paint layer applied on the coil base plate (12).

6. The support device according to claim 1 or 5,
**characterised in that**
the electrically conductive paint layer (14) is made of non-magnetic material.

7. The support device according to claim 1 or 5,
**characterised in that**
the electrically conductive and/or magnetic paint layer (14) is made of magnetic material.

8. The support device according to claim 1,
**characterised in that**
the electrically conductive and/or magnetic layer (14) is evenly distributed on at least one large-area side of the coil base plate (12).

9. The support device according to claim 1,
**characterised in that**
the electrically conductive and/or magnetic layer (14) is subdivided into separate parts.

10. The support device according to any one of the preceding claims,
**characterised in that**
the electrically conductive and/or magnetic layer (14) and/or the separate parts of the electrically conductive layer (14) are electrically floating.

11. The support device according to any one of claims 1 to 9,
**characterised in that**
the electrically conductive and/or magnetic layer (14) and/or the separate parts of the electrically conductive layer (14) are connected to an electrical reference point.

12. The support device according to any one of the preceding claims,
**characterised in that**
the coil base plate (12) is made of plastic, mica, fibre glass compound and/or composite epoxy material.

13. An induction coil for an induction heating appliance, in particular for an induction cooking appliance, preferably for an induction cooking hob or induction cooking oven,
**characterised in that**
the induction coil includes a support device (10) according to anyone of the claims 1 to 12.

14. An induction heating appliance, in particular an induction cooking appliance, preferably an induction cooking hob or induction cooking oven,
**characterised in that**
the induction heating appliance comprises at least one support device (10) according to anyone of the claims 1 to 12 and/or at least one induction coil according to claim 13.

## Patentansprüche

1. Haltevorrichtung (10) für eine Induktionsspule eines Induktionsheizgeräts, wobei:
- die Haltevorrichtung (10) wenigstens eine Spulengrundplatte (12) aufweist, die zum Halten der Induktionsspule ausgelegt ist,
- die Spulengrundplatte (12) aus wenigstens einem elektrisch nicht leitenden Material gefertigt ist,
- die Haltevorrichtung (10) wenigstens eine elektrisch leitende und/oder magnetische Schicht (14) aufweist und
- die elektrisch leitende und/oder magnetische Schicht (14) auf wenigstens einer großflächigen Seite der Spulengrundplatte (12) aufgebracht ist,
- die Haltevorrichtung (10) wenigstens ein Ferrit-Element (16) aufweist, das auf der elektrisch leitenden und/oder magnetischen Schicht (14) angeordnet ist,
**dadurch gekennzeichnet, dass**
die elektrisch leitende und/oder magnetische Schicht (14) eine elektrisch leitende und/oder magnetische Farbschicht ist, die auf die Spulengrundplatte (12) aufgebracht ist.

2. Haltevorrichtung (10) für eine Induktionsspule eines Induktionsheizgeräts, wobei:
- die Haltevorrichtung (10) wenigstens eine Spulengrundplatte (12) aufweist, die zum Halten der Induktionsspule ausgelegt ist,
- die Spulengrundplatte (12) aus wenigstens einem elektrisch nicht leitenden Material gefertigt ist,
- die Haltevorrichtung (10) wenigstens eine elektrisch leitende und/oder magnetische Schicht (14) aufweist und
- die elektrisch leitende und/oder magnetische Schicht (14) auf wenigstens einer großflächigen Seite der Spulengrundplatte (12) aufgebracht ist,
**dadurch gekennzeichnet, dass**
die Haltevorrichtung (10) wenigstens ein Ferrit-Element (16) aufweist, das direkt auf der Spulengrundplatte (12) angeordnet ist, und die elektrisch leitende und/oder magnetische Schicht (14) in verschiedene Teile unterteilt ist, wobei die einzelnen Teile der elektrisch leitenden und/oder magnetischen Schicht (14) und die Ferrit-Elemente nebeneinander auf der Spulengrundplatte (12) angeordnet sind.

3. Haltevorrichtung gemäß Anspruch 2,
**dadurch gekennzeichnet, dass**
die elektrisch leitende und/oder magnetische Schicht (14) eine Metallschicht ist, die auf der Spulengrundplatte (12) angebracht ist.

4. Haltevorrichtung gemäß Anspruch 3,
**dadurch gekennzeichnet, dass**
die Metallschicht (14) aus nicht magnetischem oder magnetischem Material gefertigt ist.

5. Haltevorrichtung gemäß Anspruch 2,
**dadurch gekennzeichnet, dass**
die elektrisch leitende und/oder magnetische Schicht (14) eine elektrisch leitende und/oder magnetische Farbschicht ist, die auf die Spulengrundplatte (12) aufgebracht ist.

6. Haltevorrichtung gemäß Anspruch 1 oder 5,
**dadurch gekennzeichnet, dass**
die elektrisch leitende Farbschicht (14) aus nicht magnetischem Material gefertigt ist.

7. Haltevorrichtung gemäß Anspruch 1 oder 5,
**dadurch gekennzeichnet, dass**
die elektrisch leitende und/oder magnetische Farbschicht (14) aus magnetischem Material gefertigt ist.

8. Haltevorrichtung gemäß Anspruch 1,
**dadurch gekennzeichnet, dass**
die elektrisch leitende und/oder magnetische Schicht (14) gleichmäßig auf wenigstens einer großflächigen Seite der Spulengrundplatte (12) verteilt ist,

9. Haltevorrichtung gemäß Anspruch 1, **dadurch gekennzeichnet, dass**
die elektrisch leitende und/oder magnetische Farbschicht (14) in mehrere Teile unterteilt ist.

10. Haltevorrichtung gemäß einem der vorstehenden Ansprüche,
**dadurch gekennzeichnet, dass**
die elektrisch leitende und/oder magnetische Schicht (14) und/oder die einzelnen Teile der elektrisch leitenden Schicht (14) elektrisch potentialfrei sind.

11. Haltevorrichtung gemäß einem der Ansprüche 1 bis 9, **dadurch gekennzeichnet, dass**
die elektrisch leitende und/oder magnetische Schicht (14) und/oder die einzelnen Teile der elektrisch leitenden Schicht (14) mit einem elektrischen Bezugspunkt verbunden sind.

12. Haltevorrichtung gemäß einem der vorstehenden Ansprüche,
**dadurch gekennzeichnet, dass**
die Spulengrundplatte (12) aus Kunststoff, Glimmer, Glasfaserverbundwerkstoff und/oder Epoxidverbundwerkstoff gefertigt ist.

13. Induktionsspule für ein Induktionsheizgerät, insbesondere für ein Induktionskochgerät, vorzugsweise für ein Induktionskochfeld oder einen Induktionsherd,
**dadurch gekennzeichnet, dass**
die Induktionsspule eine Haltevorrichtung (10) gemäß einem der Ansprüche 1 bis 12 aufweist.

14. Induktionsheizgerät, insbesondere ein Induktionskochgerät, vorzugsweise ein Induktionskochfeld oder ein Induktionsherd,
**dadurch gekennzeichnet, dass**
das Induktionsheizgerät wenigstens eine Haltevorrichtung (10) gemäß einem der Ansprüche 1 bis 12 und/oder wenigstens eine Induktionsspule gemäß Anspruch 13 umfasst.

## Revendications

1. Dispositif de support (10) pour une bobine d'induction d'un appareil de chauffage à induction, dans lequel :
- le dispositif de support (10) comporte au moins une plaque de base de bobine (12) adaptée pour supporter la bobine d'induction,
- la plaque de base de bobine (12) est constituée d'au moins un matériau électriquement non conducteur,
- le dispositif de support (10) comporte au moins une couche électriquement conductrice et/ou magnétique (14), et
- la couche électriquement conductrice et/ou magnétique (14) est appliquée sur au moins un côté de grande superficie de la plaque de base de bobine (12),
- le dispositif de support (10) comporte au moins un élément ferritique (16) disposé sur la couche électriquement conductrice et/ou magnétique (14),
**caractérisé en ce que**
la couche électriquement conductrice et/ou magnétique (14) est une couche de peinture électriquement conductrice et/ou magnétique appliquée sur la plaque de base de bobine (12).

2. Dispositif de support (10) pour une bobine d'induction d'un appareil de chauffage à induction, dans lequel :
- le dispositif de support (10) comporte au moins une plaque de base de bobine (12) adaptée pour supporter la bobine d'induction,
- la plaque de base de bobine (12) est constituée d'au moins un matériau électriquement non conducteur,
- le dispositif de support (10) comporte au moins une couche électriquement conductrice et/ou magnétique (14), et
- la couche électriquement conductrice et/ou magnétique (14) est appliquée sur au moins un côté de grande superficie de la plaque de base de bobine (12),
**caractérisé en ce que**
le dispositif de support (10) comporte au moins un élément ferritique (16) disposé directement sur la plaque de base de bobine (12), et la couche électriquement conductrice et/ou magnétique (14) est subdivisée en parties séparées, dans lequel les parties séparées de la couche électriquement conductrice et/ou magnétique (14) et les éléments ferritiques sont disposés côte à côte sur la plaque de base de bobine (12).

3. Dispositif de support selon la revendication 2,
**caractérisé en ce que**
la couche électriquement conductrice et/ou magnétique (14) est une couche métallique attachée sur la plaque de base de bobine (12).

4. Dispositif de support selon la revendication 3,
**caractérisé en ce que**
la couche métallique (14) est constituée d'un matériau amagnétique ou magnétique.

5. Dispositif de support selon la revendication 2,
**caractérisé en ce que**
la couche électriquement conductrice et/ou magnétique (14) est une couche de peinture électriquement conductrice et/ou magnétique appliquée sur la plaque de base de bobine (12).

6. Dispositif de support selon la revendication 1 ou 5,
**caractérisé en ce que**
la couche de peinture électriquement conductrice (14) est constituée d'un matériau amagnétique.

7. Dispositif de support selon la revendication 1 ou 5,
**caractérisé en ce que**
la couche de peinture électriquement conductrice et/ou magnétique (14) est constituée d'un matériau magnétique.

8. Dispositif de support selon la revendication 1,
**caractérisé en ce que**
la couche électriquement conductrice et/ou magnétique (14) est répartie uniformément sur au moins un côté de grande superficie de la plaque de base de bobine (12).

9. Dispositif de support selon la revendication 1,
**caractérisé en ce que**
la couche électriquement conductrice et/ou magnétique (14) est subdivisée en parties séparées.

10. Dispositif de support selon l'une quelconque des revendications précédentes,
**caractérisé en ce que**
la couche électriquement conductrice et/ou magnétique (14) et/ou les parties séparées de la couche électriquement conductrice (14) sont électriquement flottantes.

11. Dispositif de support selon l'une quelconque des revendications 1 à 9,
**caractérisé en ce que**
la couche électriquement conductrice et/ou magnétique (14) et/ou les parties séparées de la couche électriquement conductrice (14) sont reliées à un point de référence électrique.

12. Dispositif de support selon l'une quelconque des revendications précédentes,
**caractérisé en ce que**
la plaque de base de bobine (12) est constituée de plastique, de mica, d'un composé de fibres de verre et/ou d'un matériau époxy composite.

13. Bobine d'induction pour un appareil de chauffage à induction, en particulier pour un appareil de cuisson à induction, de préférence pour une plaque de cuisson à induction ou un four de cuisson à induction,
**caractérisée en ce que**
la bobine d'induction comporte un dispositif de support (10) selon l'une quelconque des revendications 1 à 12.

14. Appareil de chauffage à induction, en particulier appareil de cuisson à induction, de préférence plaque de cuisson à induction ou four de cuisson à induction,
**caractérisé en ce que**
l'appareil de chauffage à induction comprend au moins un dispositif de support (10) selon l'une quelconque des revendications 1 à 12 et/ou au moins une bobine d'induction selon la revendication 13.
